# FASCICULE DE BREVET EUROPEEN

(11) **EP 4 325 304 B1**
(45) Date de publication et mention de la délivrance du brevet: **11.03.2026**
(21) Numéro de dépôt: 22190383.4
(22) Date de dépôt: 15.08.2022
(51) Int. Cl.: G04G 13/02, H02K 33/18

(54) **ALARME NON SONORE ELECTROMAGNETIQUE**
NICHTAKUSTISCHER ELEKTROMAGNETISCHER ALARM
ELECTROMAGNETIC SILENT ALARM

(43) Date de publication de la demande: 21.02.2024
(73) Titulaire: The Swatch Group Research and Development Ltd, 2074 Marin (CH)
(72) Inventeur: BORN, Jean-Jacques, 1110 Morges (CH); Poli, Gian-Carlo, 2206 Les Geneveys-sur-Coffrane (CH)
(74) Mandataire: ICB SA

(56) Documents cités:
- EP-A1- 0 625 738
- EP-A1- 1 659 676
- US-A1- 2011 025 479

## Description

### Domaine technique de l'invention

L'invention concerne une alarme non sonore destinée à équiper un objet portable.

L'invention concerne plus particulièrement une alarme non sonore vibrante et résonnante, de petites dimensions, adaptée pour être intégrée dans un objet portable de faible épaisseur, tel qu'une pièce d'horlogerie.

L'invention concerne encore un objet portable, telle qu'une pièce d'horlogerie, notamment une montre, comportant une telle alarme non sonore.

### Arrière-plan technologique

Les alarmes classiques équipant les objets portables, et notamment les pièces d'horlogerie, permettent de fournir une information sonore, par exemple liée à un événement et/ou à une information horaire, en émettant un son choisi dans une gamme ou selon une tonalité particulière.

Ces alarmes ont l'inconvénient essentiel d'être sonores et d'être perçues par l'environnement de l'utilisateur.

De plus, de telles alarmes sonores ne permettent pas de pouvoir différencier l'objet portable de l'utilisateur (le porteur) des autres objets portables appartenant aux personnes de son environnement.

Ainsi, on comprend que ces alarmes sonores présentent plusieurs inconvénients : elles ne sont pas discrètes et sont perceptibles par d'autres personnes que l'utilisateur, ce qui peut être problématique dans certains environnements ; elles ne permettent pas au porteur de faire une distinction entre son objet portable et les autres objets portables de son environnement, par exemple au sein de groupes de plusieurs personnes.

Pour pallier cela, il a été proposé des alarmes silencieuses, dites non sonores, vibrantes qui comportent des moteurs entrainant une masse, l'ensemble étant configuré pour fournir un effet vibratoire qui peut être transmis à l'utilisateur. Une telle vibration présente l'avantage d'être perçue uniquement par l'utilisateur, ce qui permet d'être discret et de ne pas déranger les personnes de l'environnement de l'utilisateur, lors du déclenchement de l'alarme, par exemple pour l'heure du réveil, pour un appel reçu, pour une information liée au changement d'heure, etc.

Une telle alarme non sonore est par exemple décrite dans le document EP 0349230. Cette alarme comporte un moteur piézo-électrique qui entraine en rotation une masse excentrique montée mobile sur un arbre.

Toutefois, à cause de la configuration coaxiale de cette alarme, celle-ci présente un encombrement relativement important si bien qu'elle nécessite, pour son montage dans une pièce d'horlogerie, un aménagement spécifique, voire une reconstruction complète de cette pièce d'horlogerie, ce qui est problématique.

De plus, cette alarme non sonore nécessite l'utilisation d'un moteur piézo-électrique dont la fabrication fait appel à des techniques relativement complexes.

Pour répondre à cette problématique, il a été développé une alarme non sonore décrite dans le document EP 0625738 A1 de conception plus simple, d'encombrement réduit et avec un coût de fabrication plus faible.

L'alarme non sonore du document EP 0625738 A1 comporte un moteur électromagnétique monté fixement sur un support, le moteur électromagnétique mettant en mouvement une masse lourde pour fournir un effet vibratoire avec un mouvement oscillatoire de la masse quasi linéaire.

Une telle alarme non sonore présente une consommation électrique de l'ordre de 10 mW.

Or, dans le domaine des objets portables, il existe un besoin constant d'améliorer la conception, l'encombrement, et/ou la consommation des différents éléments constitutifs des objets portables, comme notamment les alarmes, notamment pour augmenter la durée de vie des objets portables en minimisant la consommation électrique des différents organes constituant l'objet portable.

### Résumé de l'invention

Dans ce contexte, l'invention vise à fournir une solution à au moins une des problématiques décrites précédemment.

Notamment, l'invention vise à proposer une alarme non sonore de conception simplifiée pouvant s'intégrer facilement dans les objets portables, notamment les pièces d'horlogerie, sans modification importante de sa structure, pouvant être réalisée à faible coût, par des opérations automatisées à grande vitesse par exemple, et présentant une consommation électrique améliorée.

Dans ce contexte, l'invention concerne une alarme non sonore pour objet portable comportant des moyens moteurs électromagnétiques qui peuvent être commandés électriquement pour générer un effet vibratoire, selon les caractéristiques de la revendication 1.

Outre les caractéristiques évoquées dans le paragraphe précédent, l'alarme non sonore électromagnétique selon l'invention peut présenter une ou plusieurs caractéristiques complémentaires selon les revendications dépendantes.

L'invention concerne également un objet portable comportant une alarme non sonore selon l'invention.

Préférentiellement, l'objet portable est une pièce d'horlogerie, par exemple une montre.

### Brève description des figures

Les buts, avantages et caractéristiques de la présente invention apparaîtront à la lecture de la description détaillée ci-dessous faisant référence aux figures suivantes :
- la figure 1 est une vue d'ensemble en perspective illustrant schématiquement un exemple de réalisation d'une alarme non sonore selon l'invention ;
- la figure 2 représente une vue en éclatée de l'alarme non sonore illustrée à la figure 1, permettant de visualiser les différents éléments constitutifs de l'alarme non sonore selon l'invention ;
- la figure 3 représente une vue en coupe de l'alarme non sonore 100 illustrée à la figure 1, selon un plan de coupe médian M1 ;
- la figure 4 est une vue détaillée de la figure 3, illustrant particulièrement les différentes polarités du circuit magnétique des moyens moteurs électromagnétiques lorsque la bobine reçoit une alimentation électrique positive ;
- la figure 5 est une vue détaillée de la figure 3, illustrant particulièrement les différentes polarités du circuit magnétique des moyens moteurs électromagnétiques lorsque la bobine reçoit une alimentation électrique négative ;
- la figure 6 est un graphique illustrant un exemple d'alimentation électrique des moyens moteurs électromagnétiques de l'alarme non sonore selon l'invention, afin de générer un effet vibratoire perceptible par l'utilisateur ;
- la figure 7 est une vue schématique d'une pièce d'horlogerie intégrant une alarme non sonore selon l'invention illustrée à la figure 1.

Dans toutes les figures, les éléments communs portent les mêmes numéros de référence sauf précision contraire.

### Description détaillée de l'invention

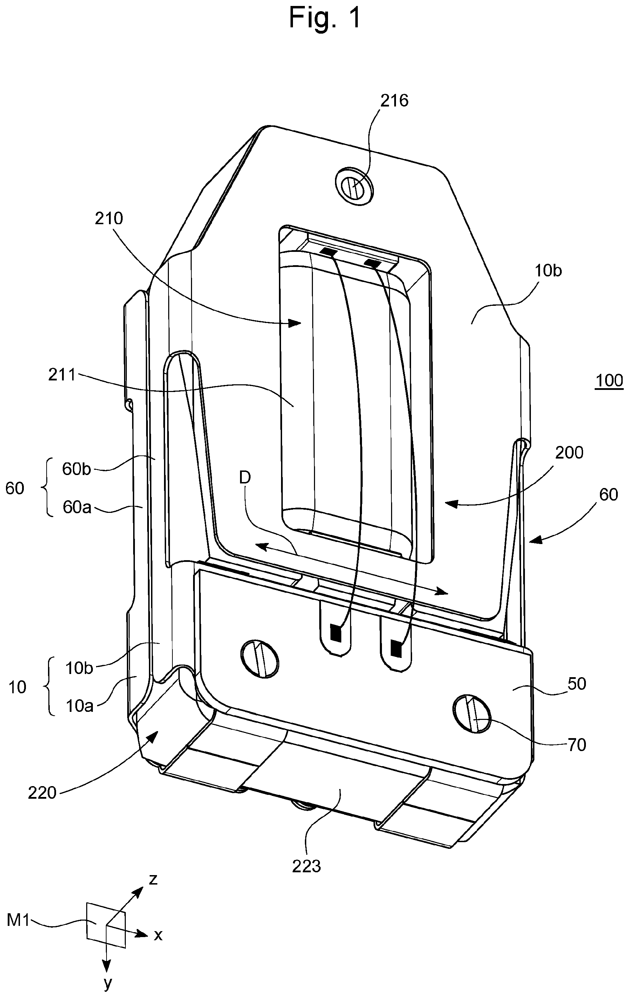

La figure 1 est une vue en perspective illustrant schématiquement un exemple de réalisation d'une alarme non sonore 100 selon l'invention.

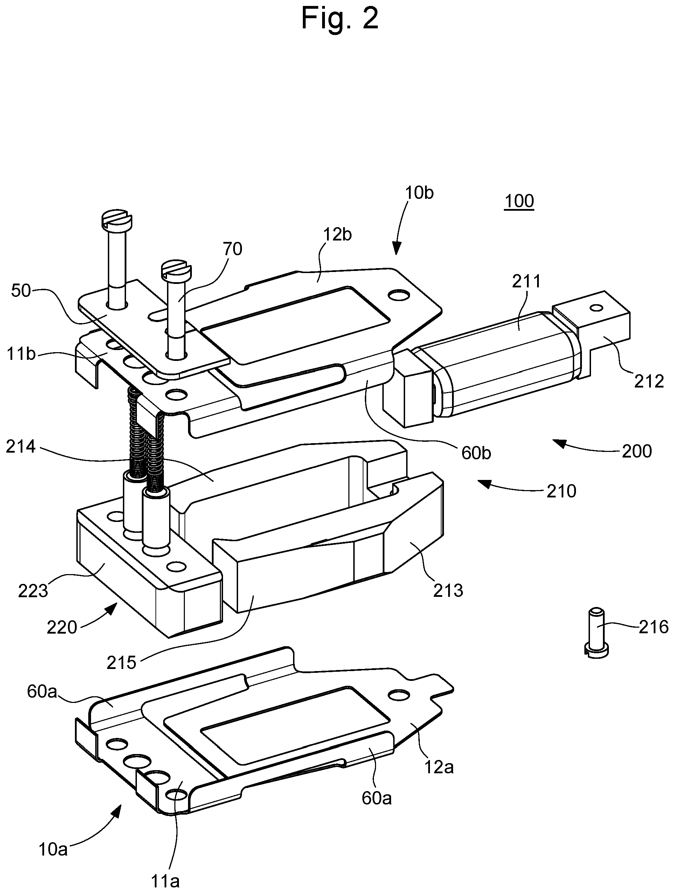

La figure 2 représente une vue en éclatée de l'alarme non sonore 100 illustrée à la figure 1, permettant de visualiser les différents éléments constitutifs de l'alarme non sonore.

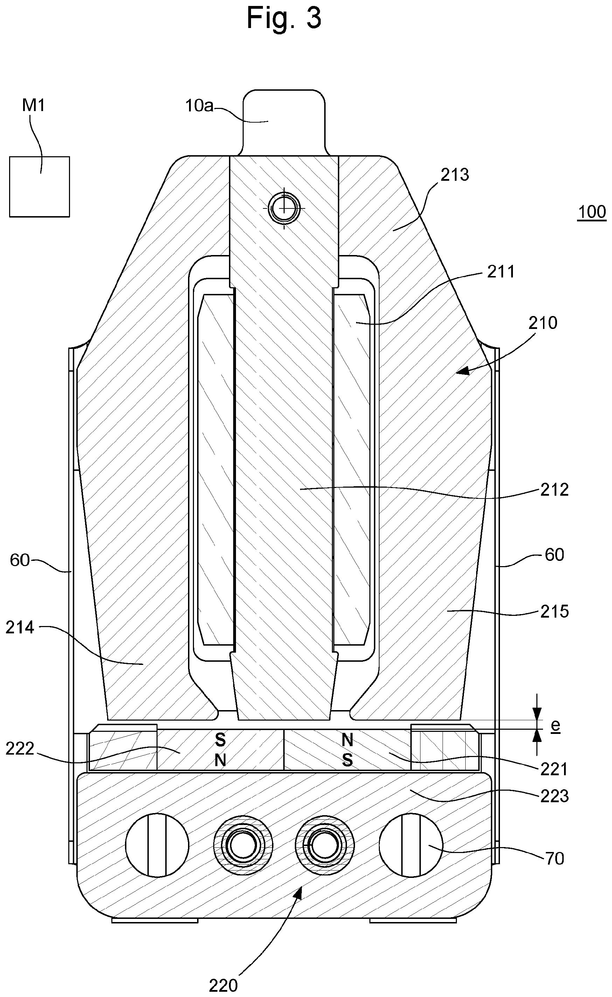

La figure 3 représente une vue en coupe de l'alarme non sonore 100 illustrée à la figure 1, selon le plan de coupe médian M1 illustré à la figure 1.

L'alarme non sonore 100 selon l'invention est une alarme non sonore, de type électromagnétique, comportant des moyens moteurs électromagnétiques 200 qui peuvent être commandés électriquement pour mettre en mouvement un organe mobile pour générer un effet vibratoire par oscillation de l'organe mobile.

L'alarme non sonore 100 selon l'invention est particulièrement adaptée pour équiper des objets portables de petites dimensions, comme par exemple une pièce d'horlogerie 1.

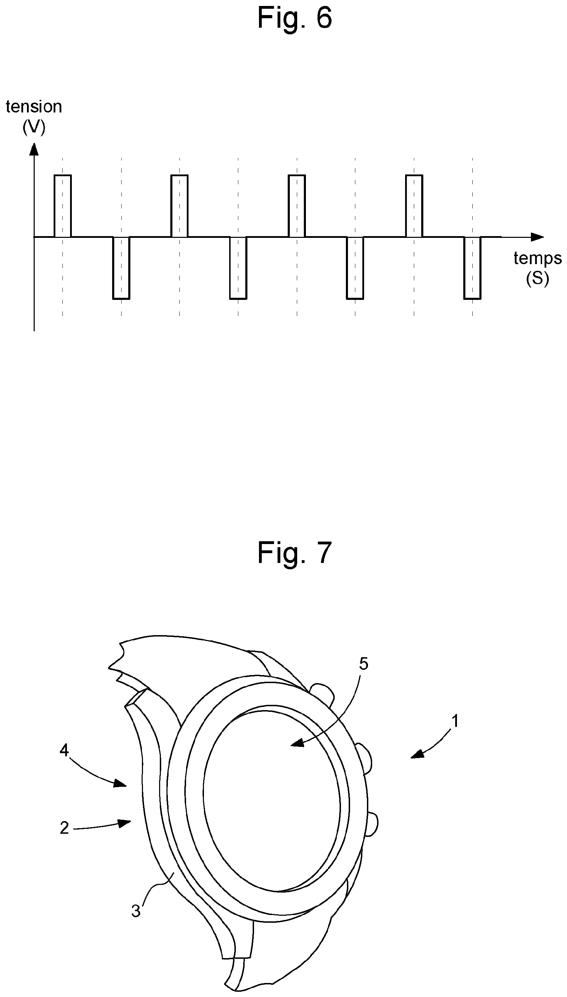

Une telle pièce d'horlogerie 1 est représentée schématiquement à la figure 7, à titre d'exemple de réalisation

La pièce d'horlogerie 1 comporte une boîte 2 constituée d'une carrure 3 et d'un fond 4 fixé de façon classique à la carrure 3. La boîte 2 délimite un espace interne 5 configuré pour recevoir un mouvement horométrique (non représenté) ainsi qu'une alarme non sonore 100 selon l'invention.

La pièce d'horlogerie 1 comporte en outre une source d'énergie, non représentée, par exemple une pile, configurée pour alimenter électriquement au moins l'alarme non sonore 100 selon l'invention.

Préférentiellement, la source d'énergie est reliée électriquement à un boîtier électronique de commande 50 configuré pour piloter les moyens moteurs électromagnétiques 200 de l'alarme non sonore 100 selon l'invention.

En se référant désormais aux figures 1 à 3, on décrira de façon plus détaillée l'alarme non sonore 100 selon l'invention équipant la pièce d'horlogerie 1.

L'alarme non sonore 100 comporte :
- un support 10 pouvant comporter des éléments de fixation 70 ad-hocs permettant la fixation de l'alarme non sonore 100 à la pièce d'horlogerie 1 ;
- le boîtier électronique de commande 50 apte à être connecté électriquement à la source d'énergie équipant l'objet portable ;
- des moyens moteurs électromagnétiques 200 reliés électriquement au boîtier électronique de commande 50, aptes à générer un effet vibratoire.

Les moyens moteurs électromagnétiques 200 sont commandés électriquement par le boîtier électronique de commande 50 pour mettre en mouvement un organe mobile, de manière à obtenir un effet vibratoire perceptible par l'utilisateur portant la pièce d'horlogerie 1, ou l'objet portable, par exemple via le fond 4 en contact avec l'utilisateur.

Le boîtier électronique de commande 50 est configuré pour exciter les moyens moteurs électromagnétiques 200 à la fréquence de résonnance, ou à une fréquence proche de la fréquence de résonnance, de l'alarme non sonore 100.

Préférentiellement, le boîtier électronique de commande 50 est configuré pour exciter les moyens moteurs électromagnétiques 200 et générer une vibration à une fréquence comprise entre 120 Hz et 250 Hz.

Les moyens moteurs électromagnétiques 200 comportent un circuit magnétique composé d'un circuit magnétique mobile 210 et d'un circuit magnétique fixe 220. Le circuit magnétique mobile 210 et le circuit magnétique fixe 220 sont portés par un support 10.

Le support 10 est un élément multifonctionnel comportant une partie fixe 11a, 11b portant le circuit magnétique fixe 220. La partie fixe 11a, 11b du support 10 porte également le boîtier électronique de commande 50.

Le circuit magnétique fixe 220 est par exemple rendu solidaire à la partie fixe 11a, 11b du support 10 par l'intermédiaire de moyens de fixation, par exemple par soudage électrique, dit soudage par point.

Le support 10 comporte en outre une partie mobile 12a, 12b conformée pour porter le circuit magnétique mobile 210.

Le circuit magnétique mobile 210 est rendu solidaire de la partie mobile 12a, 12b du support 10 par l'intermédiaire de moyens de fixation, par exemple par soudage électrique, dit soudage par point.

La partie fixe 11a, 11b du support 10 est destinée être solidarisée à la pièce d'horlogerie, par exemple au niveau du fond 4 de la pièce d'horlogerie 1, par exemple par vissage ou collage.

Comme représenté à la figure 2, la partie fixe 11a, 11b du support 10 coopère avec les éléments de fixation 70, de type vis, pour solidariser la partie fixe 11a, 11b du support 10 à la pièce d'horlogerie 1.

Le boîtier électronique de commande 50 est par exemple solidarisé à la partie fixe 11a, 11b du support 10 par collage, ou encore par les moyens de fixation 70 permettant de solidariser le support 10 à la pièce d'horlogerie 1.

Le support 10 comporte en outre des éléments de liaison élastique 60 reliant mécaniquement la partie mobile 12a, 12b et la partie fixe 11a, 11b du support 10. Les éléments de liaison élastique 60 sont formés par des lames souples élastiques 60a, 60b, de faible épaisseur, s'étendant dans un plan perpendiculaire au plan formé par la partie fixe 11a, 11b et la partie mobile 12a, 12b du support 10, et parallèlement au plan médian M1.

Les éléments de liaison élastique 60 sont configurés pour assurer une fonction de support de la partie mobile 12a, 12b du support 10, et donc du circuit magnétique mobile 210, notamment selon la direction z et y, tout en autorisant un déplacement latéral du circuit magnétique mobile 210, selon un mouvement de translation, le long de la direction x.

Les éléments de liaison élastique 60 sont conformés pour être souples selon une direction déterminée, ici la direction x, afin de permettre une oscillation linéaire, voire quasi linéaire, du circuit magnétique mobile 210 par rapport au circuit magnétique fixe 220, selon une direction latérale indiquée par la flèche D de la figure 1.

Autrement dit, le support 10 ainsi que la forme et la disposition des éléments de liaison élastique 60 par rapport aux circuits magnétiques mobile 210 et fixe 220 permettent d'autoriser un déplacement latéral, sensiblement en translation selon la direction x, du circuit magnétique mobile 210 par rapport au circuit magnétique fixe 220, sous commande du boîtier électronique de commande 50.

Les éléments de liaison élastique 60 sont des lames souples raccordées fixement au support 10 ou venus de matière avec le support 10.

Les éléments de liaison élastique 60 bordent de part et d'autre le circuit magnétique mobile 210.

Les éléments de liaison élastique 60 ont également une fonction de rappel élastique tendant à ramener le circuit magnétique mobile 210 dans une position d'équilibre de repos, sans sollicitation électrique des moyens moteurs électromagnétiques 200.

A titre d'exemple, chaque élément de liaison élastique 60 est composée d'une languette inférieure 60a et d'une languette supérieure 60b disposées symétriquement au niveau de chaque tranche des moyens moteurs électromagnétiques 200, par rapport à un plan médian M1, divisant l'alarme non sonore 100 en deux selon la hauteur.

Le support 10 est avantageusement réalisé en deux pièces distinctes formant une demi-coque inférieure 10a et une demi-coque supérieure 10b, les deux demi-coques 10a, 10b étant configurées pour encapsuler et maintenir les moyens moteurs électromagnétiques 200, et plus particulièrement le circuit magnétique mobile 210 et le circuit magnétique fixe 220. Chaque demi-coque 10a, 10b comportent deux languettes élastiques 60a, 60b latérales formant les éléments de liaison élastique 60 décrits précédemment. Les languettes élastiques 60a, 60b, ménagées symétriquement, permettent ainsi de border latéralement une portion supérieure des moyens moteurs électromécaniques 200 et une portion inférieure des moyens moteurs électromécaniques 200. Ainsi, avec une telle configuration, on s'affranchit des déplacements selon l'axe z par déformation élastique des languettes élastiques 60a, 60b.

Les demi-coques 10a, 10b du support 10 sont par exemple réalisées à partir d'une plaque plane, par exemple métallique, de faible épaisseur, et les languettes élastiques 60a, 60b viennent de matière avec les parties fixes 11a, 11b et les parties mobiles 12a, 12b du support 10.

Le circuit magnétique mobile 210 comporte un noyau ferromagnétique 212 et une bobine 211 enroulée de façon classique autour du noyau ferromagnétique 212.

Le noyau ferromagnétique 212 est couplé à une cage magnétique 213 au niveau d'un des pôles du noyau ferromagnétique 212, de sorte que la cage magnétique 213 forme une prolongation du noyau ferromagnétique 212. Le noyau ferromagnétique 212 est rendu solidaire de la cage magnétique 213 par des moyens de fixations ad hocs, par exemple par un élément de vissage 216.

L'ensemble magnétique du circuit magnétique mobile 210 est suffisamment lourd pour constituer une masse mobile apte à générer un effet vibratoire susceptible d'être perçu par l'utilisateur.

Dans l'exemple de réalisation illustré aux figures 1 à 3, et comme visible particulièrement à la figure 2, le noyau ferromagnétique 212 est dissocié de la cage magnétique 213 ; toutefois, le noyau ferromagnétique 212 et la cage magnétique 213 peuvent être monobloc. La réalisation dissociée permet de faciliter l'enroulement de la bobine 211 autour du noyau ferromagnétique 212.

Selon l'invention, la masse mobile vibrante de l'alarme non sonore 100 est formée la partie mobile 210 du circuit magnétique des moyens moteurs électromagnétiques 200. La masse vibrante appartient donc au circuit magnétique de l'alarme non sonore 100.

Autrement dit, le circuit magnétique mobile 210 a également le rôle de masse mobile du système vibratoire, de sorte que dans l'alarme non sonore 100 selon l'invention, il n'est pas nécessaire d'utiliser une masse spécifique, rapportée, par exemple en métal amagnétique, couplée mécaniquement à une partie du circuit magnétique, ayant un rôle unique de masse vibrante et qui ne participe pas au circuit magnétique des moyens moteurs électromagnétiques.

Ainsi, contrairement aux solutions de l'état de la technique, la masse mobile de l'alarme non sonore 100 selon l'invention est une masse magnétique, ou ferromagnétique, constituant également le circuit magnétique mobile 210 des moyens moteurs électromagnétiques 200.

Le circuit magnétique fixe 220 comporte deux éléments 221, 222 en matériau magnétique.

Préférentiellement, les deux éléments en matériau magnétique sont des aimants permanents.

Chaque aimant permanent 221, 222 présente un axe d'aimantation permanant nord-sud (indiqué N-S) qui est orienté perpendiculairement au mouvement de translation du circuit magnétique mobile 210. Les deux aimants permanents 221, 222 présentent un axe d'aimantation inversé l'un par rapport à l'autre.

Le circuit magnétique fixe 220 comporte également un shunt 223 pour refermer le flux magnétique au niveau du circuit magnétique fixe 220 et réduire au maximum les fuites magnétiques. Ainsi, le rendement de l'alarme non sonore est optimisé.

La cage magnétique 213 comporte deux branches 214, 215 parallèles qui bordent latéralement la bobine 211 et qui s'entendent en direction du circuit magnétique fixe 220.

Les deux branches 214, 215 constituent des épanouissements polaires du noyau ferromagnétique 212 de la bobine 211 configurés pour guider le flux magnétique du circuit magnétique mobile 210 induit par la bobine 211, à proximité du circuit magnétique fixe 220, et plus particulièrement à proximité des aimants permanents 221, 222.

Les deux branches 214, 215 s'étendent en regard des aimants permanents 221, 222.

Les deux branches 214, 215 ainsi que le noyau ferromagnétique 212 délimitent, avec les aimants permanents 221, 222, un entrefer e s'étendant perpendiculairement au déplacement latéral du circuit magnétique mobile 210.

### Fonctionnement de l'alarme non sonore selon l'invention

Sous la commande du boîtier électronique de commande 50, la bobine 211 peut être alimentée électriquement et faire naître un flux magnétique qui peut circuler à l'intérieur du noyau ferromagnétique 212 et se propager dans la cage magnétique 213 au niveau des épanouissements polaires 214, 215 et peut se refermer en passant par les aimants permanents 221, 222 et le shunt 223, via l'entrefer e.

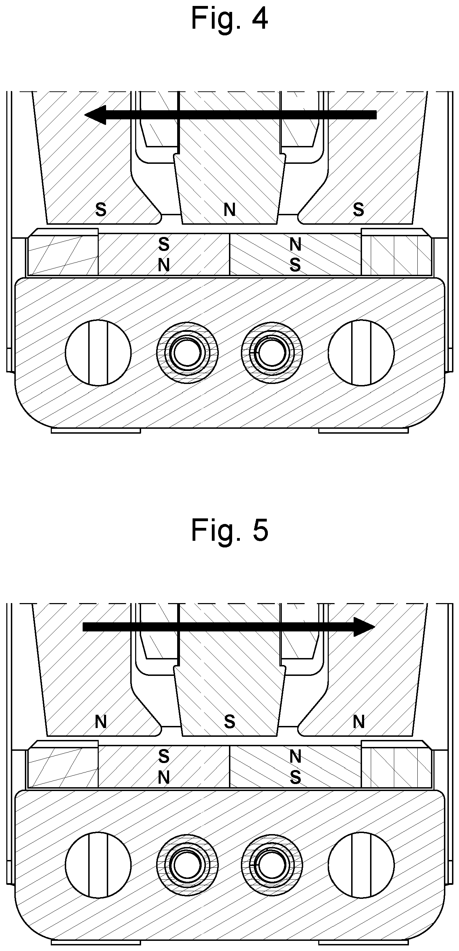

Lorsque la bobine 211 reçoit une alimentation électrique positive, par exemple sous une forme impulsionnelle, comme illustré à la figure 6, le noyau ferromagnétique 212 se polarise ainsi que les deux branches de la cage magnétique 213 comme indiqué sur la figure 4. Les différentes polarités interagissent avec les polarités des aimants permanents 221, 222, de sorte que les pôles de même signe se repoussent et les pôles de signe contraire s'attirent, ce qui crée une force magnétique déplaçant latéralement en translation, selon la direction x, le circuit magnétique mobile 210 vers la gauche sous l'effet des polarités des aimants permanents.

Lorsque la bobine 211 reçoit une alimentation électrique négative, par exemple sous la forme impulsionnelle illustrée à la figure 6, les polarités s'inversent et le circuit magnétique mobile 210 se déplace latéralement en translation à droite, selon la direction x, sous l'effet des polarités des aimants permanents, comme illustré à la figure 5.

Ainsi, sous une alimentation électrique alternative, le circuit magnétique mobile 210 va se déplacer latéralement en alternance de gauche à droite, selon un mouvement de translation selon la direction x, guidé par les éléments de liaison élastique 60. Les déplacements vont contraindre les éléments de liaison élastique 60 qui vont tendre à ramener le circuit magnétique mobile 210 dans sa position initiale, par effet de rappel élastique, et ainsi de suite pour osciller autour de cette position initiale d'équilibre, ou de repos, dans un mouvement de translation latéral de va-et-vient. Ainsi, en choisissant une alimentation électrique de forme appropriée en fréquence et en amplitude, on crée un effet vibratoire dans la boîte 2 de la pièce d'horlogerie 1 perceptible par le porteur.

Avantageusement, le boîtier électronique de commande 50 est configuré pour générer une alimentation électrique de la bobine 211, telle que représentée à titre d'exemple à la figure 6, sous la forme d'impulsions alternatives pour entretenir le mouvement d'oscillation du circuit magnétique mobile 210, les impulsions permettant de compenser l'amortissement du mouvement oscillant du circuit magnétique mobile 210.

L'alarme non sonore 100 selon l'invention, et telle que décrite précédemment, présente un encombrement réduit, ce qui convient parfaitement à une application horlogère puisque sa forme est essentiellement plane et peu épaisse, ce qui permet une intégration aisée dans une boîte de montre sans modification majeure des autres composants. A titre d'indication uniquement, une telle alarme non sonore selon l'invention a pu être réalisée avec une hauteur totale d'environ 3 mm.

L'encombrement global et le poids ont été particulièrement réduits notamment par la suppression d'une masse mobile dédiée en métal amagnétique.

L'alarme non sonore selon l'invention présente une construction magnétique optimisée avec des épanouissements polaires et un shunt, ce qui permet d'éviter les fuites magnétiques et optimiser le rendement magnétique. Ainsi, la consommation électrique d'une telle alarme est optimisée et réduite. A titre d'indication uniquement, la consommation électrique d'une telle alarme non sonore a pu être mesurée à moins de 10mW.

L'architecture inversée, de type bobine mobile, de l'alarme non sonore selon l'invention avec la mise en mouvement de la partie du circuit magnétique comportant la bobine, permet également de réduire la consommation électrique d'une telle alarme non sonore, en s'affranchissant de la mise en mouvement d'une masse lourde amagnétique dédiée.

Enfin, contrairement aux solutions de l'état de la technique, l'architecture inversée proposée permet de s'affranchir de l'utilisation d'une masse spécifique, par exemple en tungstène. Ainsi, les coûts de fabrication d'une telle alarme non sonore sont également réduits.

## Revendications

1. Alarme non sonore (100) pour objet portable (1) comportant un support (10) et des moyens moteurs électromagnétiques (200) qui peuvent être commandés électriquement pour générer un effet vibratoire, ladite alarme non sonore (100) étant définie en ce que :
- les moyens moteurs électromagnétiques (200) comportent un circuit magnétique mobile (210) et un circuit magnétique fixe (220) ; ledit circuit magnétique mobile (210) comportant une bobine (211), un noyau ferromagnétique (212) couplé à une cage magnétique (213) formant une prolongation du noyau ferromagnétique (212) ; l'ensemble magnétique dudit circuit magnétique mobile (210) constituant une masse magnétique mobile de ladite alarme non sonore (100) apte à générer ledit effet vibratoire ;
- le support (10) comportant une partie fixe (11a, 11b) recevant le circuit magnétique fixe (220) et une partie mobile (12a, 12b) recevant le circuit magnétique mobile (210), la partie fixe (11a, 11b) du support (10) comporte des moyens de fixation (70) aptes à rendre solidaire la partie fixe (11a, 11b) du support (10) à l'objet portable (1) ;
- et en ce qu'elle comporte des éléments de liaison élastique (60) appartenant au support (10) reliant mécaniquement et élastiquement la partie mobile (12a, 12b) à la partie fixe (11a, 11b), les éléments de liaison élastique (60) étant conformés pour guider et assurer un mouvement d'oscillation linéaire, ou quasi linéaire, du circuit magnétique mobile (210) lors de la commande électrique des moyens moteurs électromagnétiques (200)

2. Alarme non sonore (100) pour objet portable (1) selon la revendication précédente **caractérisée en ce que** le circuit magnétique fixe (220) comporte deux éléments en matériau magnétique (221, 222).

3. Alarme non sonore (100) pour objet portable (1) selon la revendication précédente **caractérisée en ce que** les deux éléments en matériau magnétique (221, 222) sont des aimants permanents.

4. Alarme non sonore (100) pour objet portable (1) selon la revendication précédente **caractérisée en ce que** le circuit magnétique fixe (220) comporte un shunt (223) pour refermer le flux magnétique au niveau du circuit magnétique fixe (220).

5. Alarme non sonore (100) pour objet portable (1) selon l'une des revendications précédentes **caractérisée en ce que** le support (10) est formé par une demi-coque inférieure (10a) et une demi-coque supérieure (10b) conformées pour encapsuler le circuit magnétique mobile (210) et le circuit magnétique fixe (220) des moyens moteurs électromagnétiques (200).

6. Alarme non sonore (100) pour objet portable (1) selon la revendication précédente **caractérisée en ce que** chaque demi-coque (10a, 10b) du support (10) comporte deux languettes élastiques (60a, 60b) latérales formant les éléments de liaison élastique (60), configurées pour border latéralement les moyens moteurs électromécaniques (200).

7. Alarme non sonore (100) pour objet portable (1) selon l'une des revendications précédentes **caractérisée en ce que** la cage magnétique (213) comporte deux branches (214, 215) formant des épanouissements polaires configurés pour guider un flux magnétique induit par la bobine (211) à proximité du circuit magnétique fixe (220).

8. Alarme non sonore (100) pour objet portable (1) selon la revendication précédente **caractérisée en ce que** les deux branches (214, 215) formant les épanouissements polaires et le noyau ferromagnétique (212) délimitent, avec le circuit magnétique fixe (220), un entrefer (e) s'étendant perpendiculairement au mouvement d'oscillation linéaire, ou quasi linéaire, du circuit magnétique mobile (210).

9. Alarme non sonore (100) pour objet portable (1) selon l'une des revendications précédentes **caractérisée en ce qu'**elle comporte un boîtier électronique de commande (50) configuré pour alimenter électriquement la bobine (211) de manière à faire osciller le circuit magnétique mobile (210) à sa fréquence de résonance.

10. Alarme non sonore (100) pour objet portable (1) selon l'une des revendications précédentes **caractérisée en ce qu'**elle comporte un boîtier électronique de commande (50) configuré pour alimenter électriquement la bobine (211) de manière à faire osciller le circuit magnétique mobile (210) à une fréquence choisie entre 120 **Hz** et 250 Hz.

11. Objet portable (1) comportant une alarme non sonore (100) selon l'une des revendications précédentes.

12. Objet portable (1) selon la revendication précédente **caractérisé en ce que** l'objet portable est une pièce d'horlogerie.

## Patentansprüche

1. Nicht-akustischer Alarm (100) für eine tragbare Vorrichtung (1), umfassend einen Träger (10) und elektromagnetische Antriebsmittel (200), die elektrisch gesteuert werden können, um eine Vibrationswirkung zu erzeugen, wobei der nicht-akustische Alarm (100) **dadurch gekennzeichnet ist, dass**:
- die elektromagnetischen Antriebsmittel (200) einen beweglichen Magnetkreis (210) und einen festen Magnetkreis (220) umfassen; wobei der bewegliche Magnetkreis (210) eine Spule (211) umfasst, einen ferromagnetischen Kern (212), der mit einem Magnetkäfig (213) gekoppelt ist und eine Verlängerung des ferromagnetischen Kerns (212) bildet; wobei das magnetische Gesamtsystem des beweglichen Magnetkreises (210) eine bewegliche Magnetmasse der nicht-akustischen Alarmvorrichtung (100) darstellt, die dazu geeignet ist, den Vibrationseffekt zu erzeugen;
- der Träger (10) einen festen Teil (11a, 11b) zur Aufnahme des festen Magnetkreises (220) und einen beweglichen Teil (12a, 12b) zur Aufnahme des beweglichen Magnetkreises (210) umfasst, wobei der feste Teil (11a, 11b) des Trägers (10) Befestigungsmittel (70) umfasst, die dazu geeignet sind, den festen Teil (11a, 11b) des Trägers (10) fest mit der tragbaren Vorrichtung (1) zu verbinden;
- und dadurch, dass sie elastische Verbindungselemente (60) umfasst, die zum Träger (10) gehören und den beweglichen Teil (12a, 12b) mit dem festen Teil (11a, 11b) verbinden,
wobei die elastischen Verbindungselemente (60) so ausgebildet sind, dass sie eine lineare oder nahezu lineare Schwingungsbewegung des beweglichen Magnetkreises (210) beim elektrischen Ansteuern der elektromagnetischen Antriebsmittel (200) führen und gewährleisten.

2. Nicht-akustische Alarmsignale (100) für eine tragbare Vorrichtung (1) nach dem vorhergehenden Anspruch, **dadurch gekennzeichnet, dass** der feste Magnetkreis (220) zwei Elemente aus Magnetmaterial (221,222) umfasst.

3. Nicht-akustischer Alarm (100) für eine tragbare Vorrichtung (1) nach dem vorstehenden Anspruch, **dadurch gekennzeichnet, dass** die beiden Elemente aus Magnetmaterial (221, 222) Permanentmagnete sind.

4. Nicht-akustische Alarmsignale (100) für eine tragbare Vorrichtung (1) nach dem vorstehenden Anspruch, **dadurch gekennzeichnet, dass** der feste Magnetkreis (220) einen Shunt (223) enthält, um den Magnetfluss im festen Magnetkreis (220) zu schließen.

5. Nicht-akustischer Alarm (100) für eine tragbare Vorrichtung (1) nach einem der vorhergehenden Ansprüche, **dadurch gekennzeichnet, dass** der Träger (10) aus einer unteren Halbschale (10a) und einer oberen Halbschale (10b) gebildet ist, die so gestaltet sind, dass sie den beweglichen Magnetkreis (210) und den festen Magnetkreis (220) der elektromagnetischen Antriebsmittel (200) einfassen.

6. Nicht-akustischer Alarm (100) für eine tragbare Vorrichtung (1) nach dem vorhergehenden Anspruch, **dadurch gekennzeichnet, dass** jede Halbschale (10a, 10b) des Trägers (10) zwei seitliche elastische Laschen (60a, 60b) aufweist, die die elastischen Verbindungselemente (60) bilden und so konfiguriert sind, dass sie die elektromechanischen Antriebsmittel (200) seitlich einfassen.

7. Nicht-akustische Alarmsignale (100) für eine tragbare Vorrichtung (1) nach einem der vorhergehenden Ansprüche, **dadurch gekennzeichnet, dass** das Magnetgehäuse (213) zwei Zweige (214, 215) aufweist, die Polschuhe bilden, die zur Führung eines durch die Spule (211) induzierten Magnetflusses in der Nähe des festen Magnetkreises (220) konfiguriert sind.

8. Nicht-akustische Alarmsignale (100) für eine tragbare Vorrichtung (1) nach dem vorhergehenden Anspruch, **dadurch gekennzeichnet, dass** die beiden Zweige (214, 215) die Polschuhe bilden, und der ferromagnetische Kern (212) zusammen mit dem festen Magnetkreis (220) einen Luftspalt (e) begrenzen, der sich senkrecht zur linearen oder nahezu linearen Schwingungsbewegung des beweglichen Magnetkreises (210) erstreckt.

9. Nicht-akustischer Alarm (100) für eine tragbare Vorrichtung (1) nach einem der vorhergehenden Ansprüche, **dadurch gekennzeichnet, dass** sie ein elektronisches Steuergehäuse (50) umfasst, das zur elektrischen Versorgung der Spule (211) konfiguriert ist, um den beweglichen Magnetkreis (210) bei seiner Resonanzfrequenz schwingen zu lassen.

10. Nicht-akustischer Alarm (100) für eine tragbare Vorrichtung (1) nach einem der vorhergehenden Ansprüche, **dadurch gekennzeichnet, dass** er ein elektronisches Steuergehäuse (50) umfasst, das zur elektrischen Versorgung der Spule (211) konfiguriert ist, um den beweglichen Magnetkreis (210) mit einer Frequenz zwischen 120 Hz und 250 Hz schwingen zu lassen.

11. Tragbare Vorrichtung (1 ) mit einem nicht-akustischen Alarm (100) nach einem der vorstehenden Ansprüche.

12. Tragbare Vorrichtung (1) nach dem vorhergehenden Anspruch, **dadurch gekennzeichnet, dass** die tragbare Vorrichtung ein Uhrwerkstück ist.

## Claims

1. Non-acoustic alarm (100) for a portable object (1) comprising a support (10) and electromagnetic motor means (200) which can be electrically controlled in order to generate a vibratory effect, said non-acoustic alarm (100) being defined in that:
- the electromagnetic motor means (200) comprise a movable magnetic circuit (210) and a stationary magnetic circuit (220); said movable magnetic circuit (210) comprising a coil (211), a ferromagnetic core (212) coupled to a magnetic cage (213) forming an extension of the ferromagnetic core (212); the magnetic assembly of said movable magnetic circuit (210) constituting a movable magnetic mass of said non-acoustic alarm (100) capable of generating said vibratory effect;
- the support (10) comprising a stationary part (11a, 11b) receiving the stationary magnetic circuit (220) and a movable part (12a, 12b) receiving the movable magnetic circuit (210), the stationary part (11a, 11b) of the support (10) comprising fastening means (70) capable of making the stationary part (11a, 11b) of the support (10) integral with the portable object (1);
- and in that it comprises resilient connection elements (60) belong to a support (10) mechanically and resiliently connecting the movable part (12a, 12b) to the stationary part (11a, 11b,
the resilient connection elements (60) being shaped to guide and ensure that the movable magnetic circuit (210) undergoes a linear, or quasi-linear, oscillatory motion during the electrical control of the electromagnetic motor means (200).

2. Non-acoustic alarm (100) for a portable object (1) according to the preceding claim, **characterised in that** the stationary magnetic circuit (220) comprises two elements made of magnetic material (221, 222).

3. Non-acoustic alarm (100) for a portable object (1) according to the preceding claim, **characterised in that** the two elements made of magnetic material (221, 222) are permanent magnets.

4. Non-acoustic alarm (100) for a portable object (1) according to the preceding claim, **characterised in that** the stationary magnetic circuit (220) comprises a shunt (223) to close the magnetic flux at the stationary magnetic circuit (220).

5. Non-acoustic alarm (100) for a portable object (1) according to one of the preceding claims, **characterised in that** the support (10) is formed by a lower half-shell (10a) and an upper half-shell (10b) shaped to encapsulate the movable magnetic circuit (210) and the stationary magnetic circuit (220) of the electromagnetic motor means (200).

6. Non-acoustic alarm (100) for a portable object (1) according to the preceding claim, **characterised in that** each half-shell (10a, 10b) of the support (10) comprises two lateral resilient tabs (60a, 60b) forming the resilient connection elements (60), configured to laterally flank the electromechanical motor means (200).

7. Non-acoustic alarm (100) for a portable object (1) according to one of the preceding claims, **characterised in that** the magnetic cage (213) comprises two branches (214, 215) forming pole shoes configured to guide a magnetic flux induced by the coil (211) in the vicinity of the stationary magnetic circuit (220).

8. Non-acoustic alarm (100) for a portable object (1) according to the preceding claim, **characterised in that** the two branches (214, 215) forming the pole shoes and the ferromagnetic core (212) delimit, together with the stationary magnetic circuit (220), an air gap (e) extending perpendicularly to the linear, or quasi-linear, oscillatory motion of the movable magnetic circuit (210).

9. Non-acoustic alarm (100) for a portable object (1) according to one of the preceding claims, **characterised in that** it comprises an electronic control unit (50) configured to supply electrical power to the coil (211) so as to cause the movable magnetic circuit (210) to oscillate at the resonant frequency thereof.

10. Non-acoustic alarm (100) for a portable object (1) according to one of the preceding claims, **characterised in that** it comprises an electronic control unit (50) configured to supply electrical power to the coil (211) so as to cause the movable magnetic circuit (210) to oscillate at a chosen frequency between 120 Hz et 250 Hz.

11. Portable object (1) comprising a non-acoustic alarm (100) according to one of the preceding claims.

12. Portable object (1) according to the preceding claim, **characterised in that** the portable object is a timepiece.
